# EUROPÄISCHE PATENTANMELDUNG

(11) **EP 3 418 561 A1**
(43) Veröffentlichungstag der Anmeldung: **26.12.2018**
(21) Anmeldenummer: 17177499.5
(22) Anmeldetag: 22.06.2017
(51) Int. Cl.: F03D 80/00

(54) **VERFAHREN FÜR EIN ANTIKOLLISIONSSYSTEM UND ANTIKOLLISIONSSYSTEM FÜR EINE WINDENERGIEANLAGE UND WINDENERGIEANLAGE**

(71) Anmelder: VOSS Energy GmbH, 18055 Rostock (DE)
(72) Erfinder: Ohm, Tim, 18057 Rostock (DE); Voß, Eberhard, 18059 Pölchow (DE); Voß, Peter, 18057 Rostock (DE); Maercker, Thomas, 18057 Rostock (DE); Behrends, Christoph, 18055 Rostock (DE)
(74) Vertreter: Garrels, Sabine

(57) **Zusammenfassung**

Das erfindungsgemäße Verfahren und das erfindungsgemäße Antikollisionssystems sollen in erster Linie dem Schutz von fliegenden Tieren dienen und beinhalten eine intelligente Präventionstechnologie, die in eine Windenergieanlage integriert ist. Mit der Technologie ist es möglich bei Tag und bei Nacht beispielsweise wildlebende Flugtiere in der Umgebung einer Windenergieanlage wahrzunehmen und darauf zu reagieren, wenn sich diese in Richtung des Rotors bewegen.

Aufgabe der Erfindung ist es demnach, Maßnahmen zu treffen, die es ermöglichen, Windenergieanlagen auch dort zu betreiben, wo fliegende Tiere in den Bereich von Rotorblättern kommen können. Demnach ist es die Aufgabe, das Kollisionsrisiko zwischen beispielsweise wildlebenden Flugtieren und Windenergieanlagen zu minimieren.

Die Lösung erfolgt durch die Verwendung verschiedener Sensor-Technologien für ein Erkennungssystem von fliegenden Objekten als Bestandteil eines Antikollisionssystems für Windenergieanlagen.

## Beschreibung

Das erfindungsgemäße Verfahren und die Anordnung eines Antikollisionssystems sollen in erster Linie dem Schutz von fliegenden Tieren dienen und beinhalten eine intelligente Präventionstechnologie, die in eine Windenergieanlage integriert ist. Mit der Technologie ist es möglich bei Tag und bei Nacht beispielsweise wildlebende Flugtiere in der Umgebung einer Windenergieanlage wahrzunehmen und darauf zu reagieren, wenn sich diese in Richtung des Rotors bewegen.

Um in Deutschland eine Genehmigung zur Errichtung einer Windenergieanlage zu erhalten, muss sich der jeweilige Antragsteller nach den Regelungen des Bundes-Immissionsschutzgesetzes (BImSchG) richten. Das BImSchG regelt den Genehmigungsprozess u.a. zum Bau von neuen Windenergieanlagen und hat den Zweck, dass bspw. Menschen, Tiere und Pflanzen vor nachteiligen Änderungen in der Umwelt bewahrt werden.

Die gesetzlichen Bestimmungen besagen, dass es verboten ist, wildlebende Tiere, die zu den besonders geschützten Arten gehören, zu verletzen oder zu töten. Des Weiteren dürfen sie nicht in dem Maße gestört werden, dass sich die lokale Population einer Art verringert. Hiervon ausgenommen sind Bauvorhaben, bei denen die Verringerung der Population ausgeschlossen werden kann, sodass der Fortbestand der Tierart in der Umgebung des Vorhabens gewährleistet ist.

In der Theorie führt es dazu, dass keine Windenergieanlagen mehr gebaut werden dürften, wenn im unmittelbaren Umfeld des Vorhabens wildlebende Tiere der besonders geschützten Arten beheimatet sind. Denn, dass ein fliegendes Tier in den Rotorbereich einer Windenergieanlage fliegt und vom Rotor getroffen wird, kann nicht ausgeschlossen werden. Trotz aller technischen Errungenschaften und Fortschritte ist es für Windenergieanlagen heutzutage standardmäßig nicht möglich im laufenden Betrieb zu erkennen, ob sich ein wildlebendes fliegendes Tier der Anlage nähert und sich im Bereich des sich drehenden Rotors befindet.

Es sind verschiedene Möglichkeiten der Erkennung und des Warnens von Vögeln bekannt, welche mit Radar, Laser, optischer Bildgebung oder Ultraschall arbeiten. Das US-Patent US 8816863 B2 (Siemens Corporation) beschreibt beispielsweise die Erkennung von Tieren am Himmel mittels Laser-Technologie. Dabei wird eine Kuppel um die Windenergieanlage gebildet. Flugtiere in diesem Bereich können in einer Entfernung von 100-200 m detektiert werden. Die untere Rotorhälfte ist allerdings nicht im Erkennungsbereich abgedeckt.

Eine weitere Methode der Erkennung von Flugtieren ist in der Patentanmeldung WO 2013029922 A1 beschrieben. Hier werden mittels Ultraschallerkennung Fledermäuse erkannt und die Parameter der Aufnahmen an die Anlagensteuerung weitergegeben. Die Betriebszeit der Anlage kann mithilfe der gewonnen Daten an die Zeiten angepasst werden, in denen eine vermehrte Fledermausaktivität festgestellt wird.

Die Patentanmeldung WO 2015128478 A1 beschreibt ein Radarerkennungssystem zur Vogelüberwachung im Bereich der Rotornabe.

In DE 102012215451 A1 wird ein Kamerasystem aus zwei Kameras an einer Windkraftanlage angeordnet, welches Panoramabilder der Umgebung der Windkraftanlage erzeugt. Über ein Auswertungssystem werden die Bilder ausgewertet und ein Warnsignal erzeugt, wenn ein fliegendes Tier von dem Auswertungssystem erkannt wird.

Ein optisches Bildgebungsverfahren wird in der Veröffentlichung US 20160053744 A1 offenbart. Eine Vielzahl von optischen Sensor-Modulen ist am Turmfuß und auf der Gondel positioniert. Es werden alle Himmelsrichtungen in einem 360° Rundumblick erfasst und ein Signal an die oberhalb gelegene schwenkbare Hauptkamera gegeben.

### Darstellung der Erfindung

Aufgabe der Erfindung ist es demnach, Maßnahmen zu treffen, die es ermöglichen, Windenergieanlagen auch dort zu betreiben, wo fliegende Tiere in den Bereich von Rotorblättern kommen können. Demnach ist es die Aufgabe, das Kollisionsrisiko zwischen beispielsweise wildlebenden Flugtieren und Windenergieanlagen zu minimieren.

Die Lösung der Aufgabe erfolgt durch die Verwendung verschiedener Sensor-Technologien für ein Erkennungssystem von fliegenden Objekten als Bestandteil eines Antikollisionssystems für Windenergieanlagen.

Die Aufgabe wird gelöst durch ein Verfahren für ein Antikollisionssystem für eine Windenergieanlage mit wenigstens einem am Turm der Windenergieanlage befestigten Sensor, wobei der Sensor wenigstens ein thermischer Sensor ist und ein Erkennungssystem darstellt mit wenigstens einen nach oben gerichteten thermischen Bildbereich. Der thermische Bildbereich stellt ein Messvolumen dar und wird digital ausgewertet.

Die Aufgabe wird weiterhin gelöst durch ein Verfahren für ein Antikollisionssystem für Windenergieanlagen, welches eine optische Bildgebung verwendet und umfasst ein kombiniertes Erkennungssystem mit thermischen Sensoren, beispielsweise basierend auf einer sogenannten Wärmebildtechnologie, und optischen Sensoren. Wenigstens ein nach oben gerichteter thermischer und optischer Bildbereich stellt ein einziges Messvolumen dar und wird gleichzeitig digital ausgewertet.

Der wenigstens eine nach oben gerichtete Bildbereich bildet ein pyramiden- oder kegelförmig ausgeprägtes Messvolumen.

Eine Ausführungsform umfasst mehrere Erkennungssysteme mit ihren Bildbereichen, welche einen vollständigen Abdeckungsbereich um die gesamte Windenergieanlage herum bilden, wobei jedes Erkennungssystem für sich oder in Koordination mit den benachbarten Erkennungssystemen Steuersignale an ein Auswerte- und Steuerungssystem der Windenergieanlage geben. Die Bildbereiche sind in einen kugelförmigen Kollisions- und einen kugelschalenförmigen Gefahrenbereich eingeteilt, wobei der kugelschalenförmige Gefahrenbereich auch Bereiche mit vermindertem Kollisionsrisiko enthält.

Das Verfahren ist weiterhin dadurch gekennzeichnet, dass bei Eintritt eines Objektes in den Bildbereich eines der Erkennungssysteme dieses Objekt von den Sensoren erfasst wird und das Messvolumen an eine automatische Bildverarbeitung weitergegeben wird, wobei eine Bildverarbeitungssoftware mit einer selbstlernenden Datenbank in Verbindung steht, wodurch über die Bewegung des Objektes und/oder über gemessene thermische Merkmale des Objektes und/oder über einen Abgleich mit in der Datenbank hinterlegten oder gelernten Merkmale, wie beispielsweise Farbe, eine Entscheidung getroffen wird, ob das Objekt auf Kollisionskurs ist, und dass ein Steuersignal an das Auswerte- und Steuerungssystem der Windenergieanlage geben wird, wodurch ein Abbremsvorgang der Windenergieanlage eingeleitet wird und/oder Warnmaßnahmen zur Verhinderung des Eindringens von Flugobjekten ausgelöst werden.

Für eine weitere Ausführungsform können die Warnmaßnahmen vor, während und/oder nach dem Einleiten des Abbremsvorgangs der Windenergieanlage ausgelöst werden.

Für eine weitere Ausführungsform wird wenigstens eine zusätzliche Lichtquelle durch das wenigstens eine Erkennungssystem gesteuert.

Die Aufgabe wird gelöst durch ein Antikollisionssystem für eine Windenergieanlage, welches wenigstens einen am Turm der Windenergieanlage befestigten Sensor umfasst. Auf der Basis einer Wärmebildtechnologie ist wenigstens ein Erkennungssystem mit wenigstens einem thermischen Sensor mit einem nach oben gerichteten Bildbereich im Fußbereich des Turms angeordnet und mit einem Auswerte- und Steuerungssystem der Windenergieanlage verbunden.

Die Aufgabe wird auch gelöst durch ein Antikollisionssystem für eine Windenergieanlage mit wenigstens einem am Turm der Windenergieanlage befestigten Sensor, wobei wenigstens ein thermischer und wenigstens ein optischer Sensor mit einem gemeinsamen nach oben gerichteten Bildbereich ein kombiniertes Erkennungssystem darstellen. Das Erkennungssystem ist im Fußbereich des Turms angeordnet und mit einem Auswerte- und Steuerungssystem der Windenergieanlage verbunden.

Eine Ausführungsform umfasst mehrere Erkennungssysteme, welche gleichmäßig am Umfang des Turms in einer horizontalen Ebene verteilt angeordnet sind, so dass die Bildbereiche einen umlaufenden Abdeckungsbereich in Form eines trichterförmigen Messvolumens bilden.

Eine weitere Ausführungsform umfasst mehrere Erkennungssysteme, welche gleichmäßig am Umfang des Turms abwechselnd vertikal versetzt angeordnet sind, so dass die Bildbereiche eine Kuppel als Messvolumen über der Windenergieanlage bilden.

Für eine weitere Ausführungsform ist das wenigstens eine Erkennungssystem mit wenigstens einer zusätzlichen Lichtquelle verbunden, welche durch das Erkennungssystem gesteuert wird.

Die Aufgabe wird auch gelöst durch eine Windenergieanlage, umfassend einen Turm, eine Gondel mit Rotor und am Rotor befindlichen Rotorblättern, wobei im Fußbereich des Turms wenigstens ein Erkennungssystem aus thermischen Sensoren mit einem nach oben gerichteten Bildbereich angeordnet ist und mit einem Auswerte- und Steuerungssystem der Windenergieanlage verbunden ist.

Die Aufgabe wird auch gelöst durch eine Windenergieanlage, umfassend einen Turm, eine Gondel mit Rotor und am Rotor befindlichen Rotorblättern, wobei im Fußbereich des Turms wenigstens ein kombiniertes Erkennungssystem aus thermischen und optischen Sensoren mit einem nach oben gerichteten Bildbereich angeordnet ist und mit einem Auswerte- und Steuerungssystem der Windenergieanlage verbunden ist.

Für eine weitere Ausführungsform ist die Windenergieanlage mit wenigstens einer zusätzlichen Lichtquelle versehen, welche mit dem wenigstens einen Erkennungssystem verbunden ist und durch das Erkennungssystem gesteuert wird.

Beide Sensor-Technologien aus thermischer und optischer Bildgebung ergänzen sich in Kombination als ein kombiniertes System und können für die Windenergieanlage auch als "Augen" betrachtet werden.

Das Verfahren ist in der Lage die Kontur der eintretenden Objekte in der Bildgebung zu erkennen und Rückschlüsse auf die Art der Objekte zu ziehen.

Optional besteht die Möglichkeit die Sensoren nicht ausschließlich für die Vogelerkennung zu verwenden, sondern zusätzlich für die Überprüfung der Gondel auf Havarien, wie bspw. Leckagen, Brände oder für den Ausfall der Rotorblattheizung. Des Weiteren kann das System mit Sensoren zur Überwachung des Eingangsbereiches zur Verhinderung von unbefugtem Eintreten in die WEA verwendet werden. Und zusätzlich könnte mithilfe einer hinterlegten Datenbank ein Vogel Monitoring über längere Zeiträume installiert werden. Diese Fälle unterstreichen die Multifunktionalität des Erkennungssystems.

### Ausführung der Erfindung

Die Erfindung wird anhand von Ausführungsbeispielen näher erläutert. Hierzu zeigen
- Figur 1: eine Windenergieanlage mit schematisch dargestelltem Bildbereich,
- Figur 2: eine Anordnung mehrerer Erkennungssysteme am Turmfuß,
- Figur 3: eine schematische Darstellung einer lückenlosen Umhüllung der Windenergieanlage,
- Figur 4: Darstellung des Zusammenspiels zwischen dem erfindungsgemäßen Antikollisionssystem und der Windenergieanlage in einem Blockschaltbild,
- Figur 5: eine Darstellung des Mess- und Erkennungsbereichs des Antikollisionssystems mit einer in
- Figur 5a: dargestellten Seitenansicht der Windenergieanlage und einer in
- Figur 5b: dargestellten Draufsicht auf eine Windenergieanlage,
- Figur 6: eine Darstellung für eine allgemeine Funktionsweise des Antikollisionssystems,

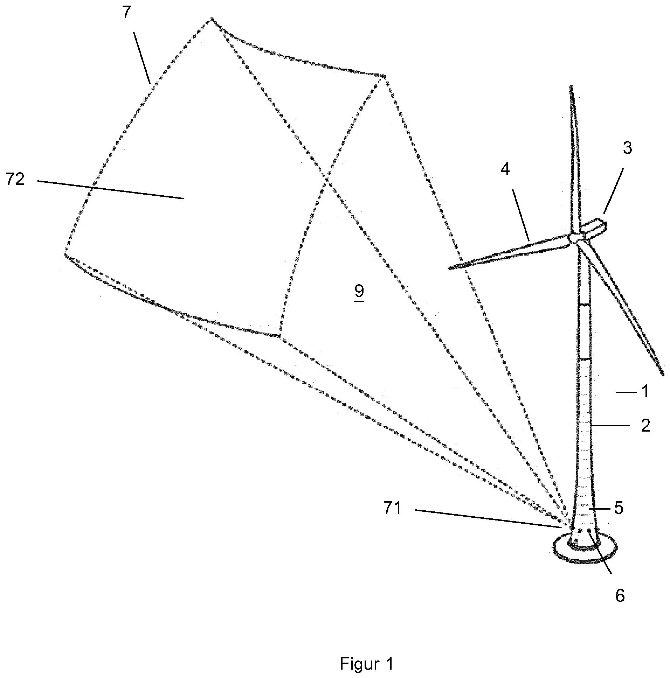

Figur 1 zeigt eine Skizze eines Antikollisionssystems für eine Windenergieanlage 1, die aus einem Turm 2, einer Gondel 3 mit Rotor und am Rotor befindlichen Rotorblättern 4 besteht. Die erfindungsgemäße Windenergieanlage 1 ist am Fußbereich 5 des Turms 2 mit mindestens einem Erkennungssystem 6 ausgestattet.

Das Erkennungssystem 6 besteht nach einem ersten Ausführungsbeispiel aus thermischen Sensoren. Alle weiterführenden Erläuterungen, welche insbesondere einen Bildbereich 7 als Messvolumen und die anschließenden Messauswertungen betreffen, treffen auch auf die alleinige Anordnung von thermischen Sensoren zu, so dass diese nicht separat erläutert werden.

Das Erkennungssystem 6 in einem zweiten Ausführungsbeispiel ist ein kombiniertes System aus thermischen und optischen Sensoren mit einer dazugehörigen Bildgebung, beispielsweise eine Kamera mit einem thermischen und einem optischen Sensor, beispielsweise einem Video- und einem Wärmebildsensor. Die Sensoren können jeweils mit einer zusätzlichen Lichtquelle (hier nicht gezeigt) mit einem Tageslichtspektrum, beispielsweise einer Infrarotlichtquelle oder einer Lichtquelle, welche in einem sichtbaren Licht strahlt, verbunden sein. Die zusätzliche Lichtquelle wird durch das Erkennungssystem (6) gesteuert, so dass auch bei bestimmten widrigen Witterungsverhältnissen das Antikollisionssystem betriebsbereit ist.

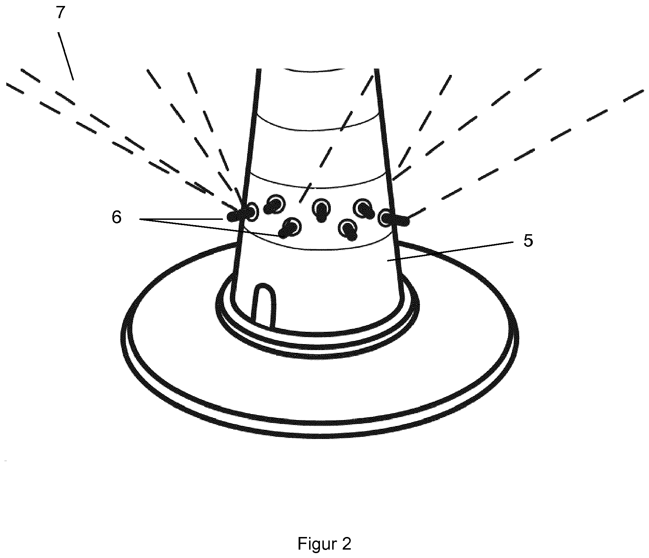

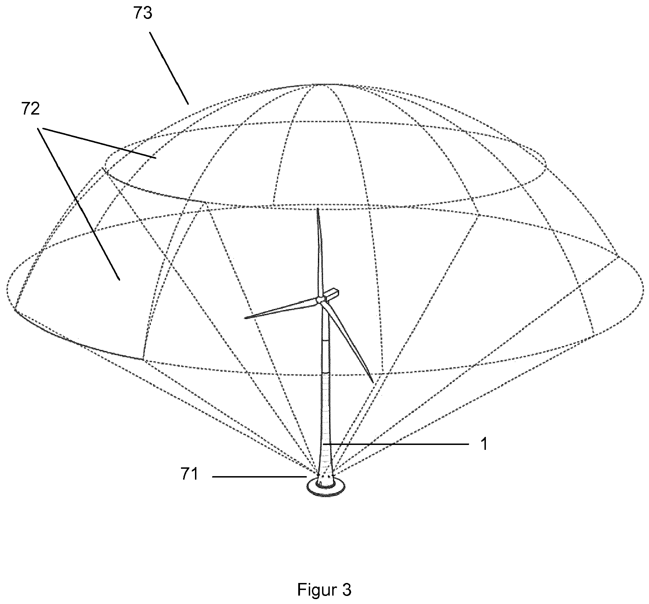

Jeweils ein Erkennungssystem 6 deckt einen pyramiden- bzw. kegelförmigen, nach oben gerichteten Bildbereich 7 als Messvolumen ab. Der Bildbereich 7 stellt sich in diesem Beispiel dar als Pyramide mit einer Pyramiden-Spitze 71, welche von dem Erkennungssystem 6 ausgeht, und einer Basis-Fläche 72, welche nach oben gerichtet ist und einen Abstand zur Windenergieanlage 1 hat. Um einen Abdeckungsbereich von 360° um die Windenergieanlage 1 herum zu erreichen, müssen weitere Erkennungssysteme 6 am Turm 2 befestigt werden. Die Anordnung der Erkennungssysteme 6 am Turm 2 ist variierbar. So ist, wie in Figur 2 gezeigt, eine Anzahl von beispielsweise acht, sechszehn oder zweiunddreißig Erkennungssystemen 6 in mehreren Ebenen möglich. Vorzugsweise werden die Erkennungssysteme 6 gleichmäßig am Umfang des Turms 2 möglichst bodennah verteilt angeordnet. Die Erkennungssysteme 6 können beweglich oder arretiert/fest installiert sein. Bei einer Anordnung von beispielsweise mehr als acht Erkennungssystemen 6 kommt es zu bildlichen Überlappungen der Sensoren zwischen den Erkennungssystemen 6. Die Erkennungssysteme 6 sollten allerdings in einer Höhe angebracht werden, die Vandalismus möglichst ausschließt. Als sinnvoll erscheint daher eine Anordnung in mindestens einer Höhe von ca. 5-10 Metern. Sind alle Erkennungssysteme 6 in einer horizontalen Ebene am Umfang des Turms 2 angeordnet, ergänzen sich die Bildbereiche 7 zu einem umlaufenden Abdeckungsbereich in Form eines Trichters. Bei abwechselnd vertikal versetzt angeordneten Erkennungssystemen 6 bilden die Bildbereiche 7 eine Kuppel 73 (Figur 3) über der gesamten Windenergieanlage 1. Dadurch erfolgt eine vollständige Abdeckung der Bildbereiche 7 von 360° um die gesamte Windenergieanlage 1 herum für die Erkennung von gefährdeten Flugobjekten 8. Gefährdete Flugobjekte 8 sind in der Regel Vögel. Es können aber auch Fledermäuse mit dem Erkennungssystem 6 identifiziert werden. Ebenso ist es möglich andere fliegende Objekte, wie beispielswese Drohnen zu identifizieren. Die gewonnenen Informationen aus der Verarbeitung der Bildgebung dienen der Bewertung des Kollisionsrisikos der eintretenden Flugobjekts 8 und gleichzeitig der Anpassung des Betriebsverhaltens der Windenergieanlage 1.

Jedes Erkennungssystem 6 ist für sich oder in Koordination mit den benachbarten Erkennungssystemen 6 mit einem Auswerte- und Steuerungssystem in der Windenergieanlage 1 verbunden. Durch das Auswerte- und Steuerungssystem können Steuersignale an die Steuerung der Windenergieanlage1 gegeben werden.

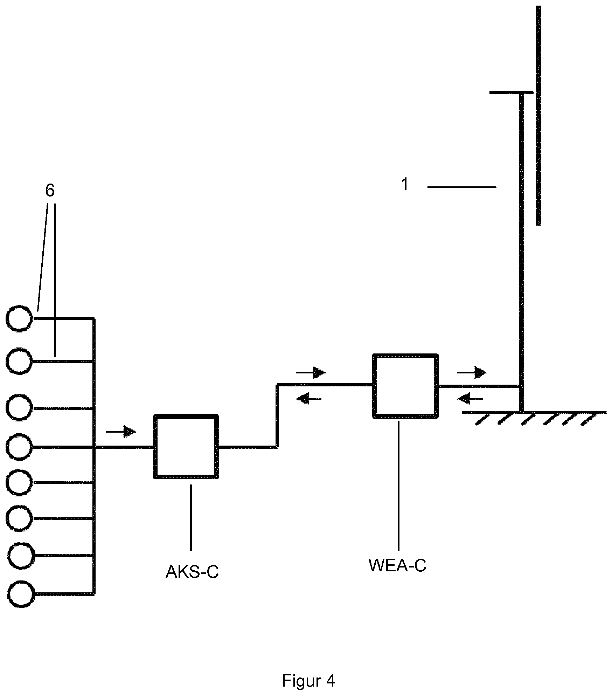

Figur 4 zeigt eine Darstellung des Zusammenspiels zwischen dem erfindungsgemäßen Antikollisionssystem und der Windenergieanlage 1 in einem Blockschaltbild. Die einzelnen Erkennungssysteme 6 in Form der Sensor-Technologien werden mit einem Controller des Antikollisionssystems AKS-C verbunden. Der Controller des Antikollisionssystems AKS-C ist wiederum mit dem Controller der Windenergieanlage WEA-C verbunden, der mit der Windenergieanlage verbunden ist. Der Controller der Windenergieanlage WEA-C steuert das Betriebsverhalten der Windenergieanlage und bezieht die Betriebsdaten von der Windenergieanlage. Die Datenströme sind durch Pfeile dargestellt. Der Controller des Antikollisionssystems AKS-C erhält Daten von den Sensoren und gleichzeitig Daten über das Betriebsverhalten der Windenergieanlage vom Controller der Windenergieanlage WEA-C. Die Daten der Sensoren werden mithilfe der Bildverarbeitungssoftware ausgewertet. Gleichzeitig sorgt die interne Erkenntnis-Logik des Controllers des Antikollisionssystems AKS-C dafür, die Ergebnisse der Bildverarbeitungssoftware mit den Betriebsdaten der Windenergieanlage aus dem Controller der Windenergieanlage WEA-C zu kombinieren und auszuwerten. Die Resultate der Auswertung werden in Steuersignale umgewandelt und an den Controller der Windenergieanlage WEA-C weitergegeben. Damit greift der Controller des Antikollisionssystems AKS-C aktiv über den Controller der Windenergieanlage WEA-C in die Steuerung des Betriebsverhaltens der Windenergieanlage zum Schutz der wildlebenden Flugtiere ein.

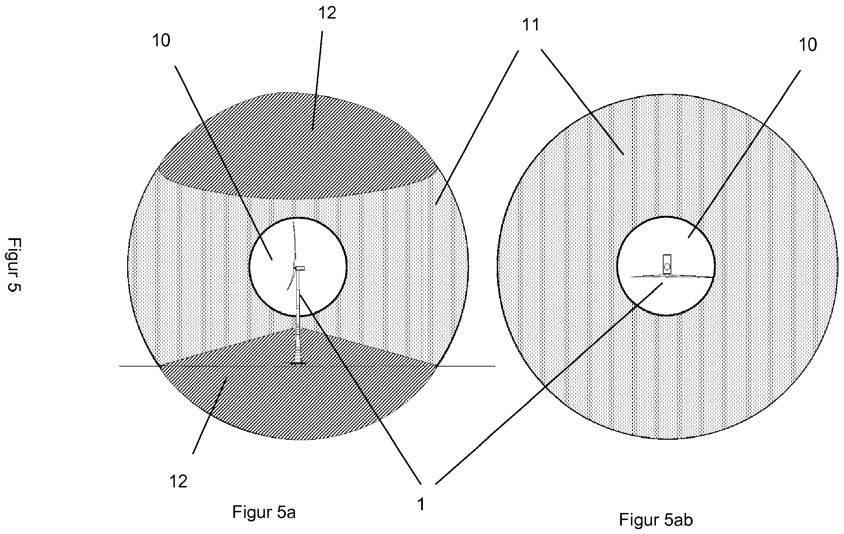

In Figur 5 wird der Mess- und Erkennungsbereich 9 des Antikollisionssystems beispielhaft anhand einer Windenergieanlage 1 mit einer Höhe von ca. 130m und einem Rotordurchmesser von ca. 130m dargestellt. Als Flugobjekt 8 wird beispielsweise das Verhalten eines Rotmilans untersucht. Dabei zeigt Figur 5a eine Seitenansicht der Windenergieanlage und Figur 5b eine Draufsicht auf eine Windenergieanlage. Die Bildbereiche sind in einen kugelförmigen Kollisionsbereich 10 (weißer Kreis mit schwarzem Rand in Figur 5a und b) und einen kugelschalenförmigen Gefahrenbereich 11 (Kugelschale mit schwarzen Punkten und schwarzem Rand in Figur 5a und b) eingeteilt, wobei der kugelschalenförmige Gefahrenbereich durch Bereiche mit vermindertem Kollisionsrisiko 12 (Flächen mit schwarzen Querstreifen in Figur 5a) definiert ist. Die Hauptgefahrenpunkte für den in diesem Beispiel als Flugobjekt 8 untersuchten Rotmilan sind die sich bewegenden Rotorblätter 4. Durch die Drehbewegung der Rotorblätter 4 im laufenden Betrieb der Windenergieanlage 1 entsteht eine Kreisfläche, die mit hoher Wahrscheinlichkeit von einem Vogel nicht unbeschadet durchflogen werden kann. Hierbei sei die maximale Blattspitzengeschwindigkeit i. H. v. 70,5 m/s zu nennen. Infolge der Windrichtungsnachführung und Drehung der Gondel 3 inkl. des Rotors in jede Himmelsrichtung, aus der der Wind kommt, entstehen wiederum eine Vielzahl weiterer solcher Flächen mit einem Durchmesser von ca. 130m (Rotordurchmesser). Zusammengelegt ergibt die Gesamtheit der Flächen einen nahezu kugelförmigen Bereich, der im Weiteren als Kollisionsbereich 10 bezeichnet wird. Der kugelförmige Kollisionsbereich 10 hat einen Durchmesser von ca. 135 m.

Das Erkennungssystem 6 hat die Aufgabe ein wildlebendes Flugobjekt 8 zu erkennen, wenn es in den Kollisionsbereich 10 eindringt während sich der Rotor in Drehbewegung befindet, und die Weitergabe der Daten an die Steuerung der Windenergieanlage 1 zur Einleitung der Abbremsgeschwindigkeit auf eine geringe Rotordrehzahl in einer Zeit von ca. zwölf Sekunden. Aus diesen beiden Aufgaben und einer angenommenen Fluggeschwindigkeit des Rotmilans von 50km/h ergibt sich um den Kollisionsbereich 10 ein weiterer Beobachtungsbereich, der im Folgenden Gefahrenbereich 11 genannt wird. Die Größe des Gefahrenbereichs 11 bestimmt sich aus dem Zeitpunkt der Erkennung des Flugobjekts 8 zuzüglich zwölf Sekunden für den Bremsvorgang. In dieser Zeit fliegt ein Rotmilan bei der genannten Fluggeschwindigkeit ca. 170m. Diese Entfernung wird auf den Radius des Kollisionsbereiches 10 hinzuaddiert, sodass eine Kugelschale mit einem Innen-Durchmesser d=135 m und der Gefahrenbereich 11 einem Außen-Durchmesser D=475 m um den Kollisionsbereich 10 entsteht.

Neben den Kollisionsbereich 10 und dem Gefahrenbereich 11 werden außerdem Bereiche 12 mit vermindertem Kollisionsrisiko innerhalb des Gefahrenbereichs 11, welche wie folgt definiert werden:
- Anflüge mit maximaler Geschwindigkeit aus diesen Bereichen in Richtung Rotor sind eher untypisch;
- Vertikale Anflüge von oben nach unten typischerweise nur bei der Nahrungssuche in Bodennähe;
- Aufsteigende Flüge von unten nach oben typischerweise nur vom Horst oder kreisend in einer Thermikschleife.

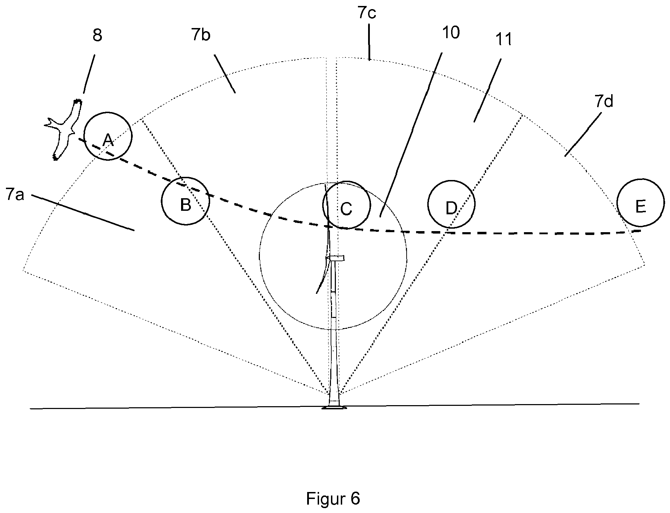

Das Erfassen von Flugobjekten 8, insbesondere des Rotmilans, im oben aufgezeigten Gefahrenbereich 11 zu jeder Tages- und Nachtzeit stellt an die Sensor-Technologie besondere Anforderungen. Eine Veranschaulichung des Kollisionsbereiches 10, des Gefahrenbereiches 11 und von Bereichen 12a bis 12c mit vermindertem Kollisionsrisiko unter Berücksichtigung der typischen Flugbewegungen eines Greifvogels wird in Figur 6 dargestellt. Es wird die allgemeine Funktionsweise des Antikollisionssystems näher erläutert. Am Punkt A tritt als Flugobjekt 8, beispielsweise ein Rotmilan, in den Bildbereich 7 des in der Skizze liegenden linken äußeren Erkennungssystems 6 ein und wird von den Sensoren erfasst. Die automatische Bildverarbeitung ist so eingestellt, dass Störobjekte, wie beispielsweise Wolken, herausgefiltert werden können. Dies ist möglich, da Wolken in der Bildgebung flächenmäßig i. d. R. um ein vielfaches größer sind, als durch das Bild fliegende Vögel. In dem ersten Bildbereich 7a wird demnach von der automatischen Bildverarbeitung als Flugobjekt 8 ein Tier mit seiner gerichteten Bewegung erkannt. Dies geschieht z.B. durch das Erkennen von aufeinanderfolgenden Bildpunkten, oder durch die Veränderung einer bestimmten Anzahl an Pixel. Eine Bildverarbeitungssoftware übernimmt die Auswertung der Bewegungsrichtungen zur Bestimmung des potentiellen Kollisionsrisikos mit dem Rotor. Geht die Bewegung des Flugobjekts 8 in Richtung des Kollisionsbereiches, wird durch die Software ein Signal für einen möglichen Abbremsvorgang an die Windenergieanlage 1 gesendet. Am Punkt B tritt der Rotmilan in den nächsten Bildbereich 7b ein und es wird automatisch ein Weitergabesignal durch Interaktion der Bildbereiche 7 ausgelöst und die Sensoren des nächsten Bildbereichs verfolgen den Vogel. Im Bildbereich 7b wird der Abbremsvorgang eingeleitet. Reaktionen der Windenergieanlage 1 können ein Anlagenstopp oder der Bremsvorgang eines einzelnen Rotorblattes 4 in Form der bewussten Einleitung einer aerodynamischen Unwucht sein. Passiert der Rotmilan nun den Punkt C, ist der Rotor auf "Trudelbetrieb" runter geregelt und der Rotmilan kann den Kollisionsbereich (Bildbereich 7c) passieren. Im weiteren Verlauf passiert der Vogel die weiteren Bildbereiche 7d und 7e mit den Grenzpunkten D und E bis der Erkennungsbereich durch den Rotmilan verlassen wird und ein Signal an die Steuerung der Windenergieanlage 1 zum erneuten Übergang in den Betriebszustand erfolgt. Neben einem möglichen Abbremsvorgang können auch Warnmaßnahmen bzgl. der wildlebenden Flugtiere ausgelöst werden. Durch diese Warnmaßnahmen, beispielsweise ist es vorstellbar, den Rotor für die Flugobjekte 8 wie eine Scheibe aussehen zu lassen, werden die Tiere in ihrer Flugbahn um die Windenergieanlage herumgeleitet. Die Warnmaßnahmen können auch vor, während und/oder nach dem Einleiten des Abbremsvorgangs ausgelöst werden.

Die Bildverarbeitungssoftware arbeitet mit einer selbstlernenden Datenbank, in der beispielsweise eine Grenzgeschwindigkeit für die Flugobjekte 8, typische Konturen der verschiedenen Flugrichtungen und Positionen zur Kamera festgelegt sind, um beispielsweise als Vogel in der näheren Umgebung einer Windenergieanlage identifiziert werden zu können. Die Bildverarbeitungssoftware prüft nach Erkennung eines sich bewegenden Flugobjektes 8, welche Flächengröße das Flugobjekt 8 besitzt. Durch einen Abgleich mit den in der Datenbank hinterlegten oder gelernten Konturen kann eine Entscheidung getroffen werden, ob es sich um ein Flugtier handelt oder nicht.

Werden mehrere Erkennungssysteme 6, beispielsweise mehr als acht, angeordnet, wird durch die bildlichen Überlappungen der Sensoren zwischen den Erkennungssystemen 6 ein Flugobjekt 8 von den Sensoren der zwei nebeneinander liegenden Erkennungssysteme 6 gleichzeitig erfasst. Daraus kann die Bildverarbeitungssoftware eine genaue Position des Flugobjektes 8, trotz zweidimensionaler Bildgebung, bestimmen.

Bilden die Bildbereiche 7 der Erkennungssysteme 6 eine Kuppel 73 über der gesamten Windenergieanlage 1 wird vermieden, dass die Bildverarbeitung bei Austritt aus einem Bildbereich 7 und Eintritt in einen neuen Bildbereich 7 erneut mit der automatischen Erkennung beginnen muss.

### Bezugszeichen

- 1: Windenergieanlage
- 2: Turm
- 3: Gondel
- 4: Rotorblättern
- 5: Fußbereich
- 6: Erkennungssystem
- 7: Bildbereich
- 7a: erster Bildbereich
- 7b: auf den ersten Bildbereich 7a folgender Bildbereich
- 7c: Bildbereich als Kollisionsbereich
- 7d-7e: weitere Bildbereiche
- 71: Pyramiden-Spitze
- 72: Basis-Fläche
- 73: Kuppel, zusammengesetzt aus mehreren Bildbereichen 7
- 8: Flugobjekt
- 9: Mess- und Erkennungsbereich
- 10: Kollisionsbereich
- 11: Gefahrenbereich
- 12: Bereiche mit vermindertem Kollisionsrisiko

- A-E: Grenzpunkte zwischen den Bildbereichen 7a-7e
- AKS-C: Controller des Antikollisionssystems
- WEA-C: Controller der Windenergieanlage

## Patentansprüche

1. Verfahren für ein Antikollisionssystem für eine Windenergieanlage (1) mit wenigstens einem am Turm (2) der Windenergieanlage (1) befestigten Sensor, **dadurch gekennzeichnet, dass**
ein Erkennungssystem (6) mit wenigstens einem thermischen Sensor wenigstens einen nach oben gerichteten thermischen Bildbereich (7) umfasst, wobei der thermische Bildbereich (7) ein Messvolumen darstellt und digital ausgewertet wird.

2. Verfahren für ein Antikollisionssystem für eine Windenergieanlage (1) unter Verwendung von optischer Bildgebung, **dadurch gekennzeichnet, dass** ein kombiniertes Erkennungssystem (6) mit thermischen und optischen Sensoren wenigstens einen nach oben gerichteten thermischen und optischen Bildbereich (7) umfasst, wobei der thermische und der optische Bildbereich (7) ein einziges Messvolumen darstellt und gleichzeitig digital ausgewertet wird.

3. Verfahren nach Anspruch 1 oder 2 **dadurch gekennzeichnet, dass**
der wenigstens eine nach oben gerichtete Bildbereich (7) ein pyramiden- oder kegelförmig ausgeprägtes Messvolumen bilden.

4. Verfahren nach Anspruch 1, 2 oder 3 **dadurch gekennzeichnet, dass** mehrere Erkennungssysteme (6) mit ihren Bildbereichen (7) einen vollständigen Abdeckungsbereich um die gesamte Windenergieanlage (1) herum umfassen, wobei jedes Erkennungssystem (6) für sich oder in Koordination mit den benachbarten Erkennungssystemen (6) Steuersignale an ein Auswerte- und Steuerungssystem der Windenergieanlage (1) geben.

5. Verfahren nach Anspruch 4 **dadurch gekennzeichnet, dass**
die Bildbereiche (7) in einen kugelförmigen Kollisionsbereich (10) und einen kugelschalenförmigen Gefahrenbereich (11) eingeteilt sind, wobei der kugelschalenförmige Gefahrenbereich (11) Bereiche (12) mit vermindertem Kollisionsrisiko enthält.

6. Verfahren nach einem der vorhergehenden Ansprüche 1 bis 5 **dadurch gekennzeichnet, dass**
bei Eintritt eines Objektes in den Bildbereich (7) eines der Erkennungssysteme (6) dieses Objekt von den Sensoren erfasst wird und das Messvolumen an eine automatischen Bildverarbeitung weitergegeben wird, wobei eine Verarbeitungssoftware mit einer selbstlernenden Datenbank in Verbindung steht, wodurch über die Bewegung des Objektes und/oder über gemessene thermische Merkmale des Objektes und/oder über einen Abgleich mit in der Datenbank hinterlegten oder gelernten Merkmale eine Entscheidung getroffen wird, ob das Objekt auf Kollisionskurs ist, und dass ein Steuersignal an das Auswerte- und Steuerungssystem der Windenergieanlage (1) geben wird, wodurch ein Abbremsvorgang der Windenergieanlage (1) eingeleitet wird und/oder Warnmaßnahmen zur Verhinderung des Eindringens von Flugobjekten (8) ausgelöst werden.

7. Verfahren nach Anspruch 6 **dadurch gekennzeichnet, dass**
die Warnmaßnahmen vor, während und/oder nach dem Einleiten des Abbremsvorgangs der Windenergieanlage (1) ausgelöst werden.

8. Verfahren nach einem der vorhergehenden Ansprüche 1 bis 7 **dadurch gekennzeichnet, dass**
wenigstens eine zusätzliche Lichtquelle durch das wenigstens eine Erkennungssystem (6) gesteuert wird.

9. Antikollisionssystem für eine Windenergieanlage (1) mit wenigstens einem am Turm (2) der Windenergieanlage (1) befestigten Sensor, **dadurch gekennzeichnet, dass**
wenigstens ein Erkennungssystem (6) mit wenigstens einem thermischen Sensor mit einem nach oben gerichteten Bildbereich (7) im Fußbereich (5) des Turms (2) angeordnet ist und mit einem Auswerte- und Steuerungssystem der Windenergieanlage (1) verbunden ist.

10. Antikollisionssystem für eine Windenergieanlage (1) mit wenigstens einem am Turm (2) der Windenergieanlage (1) befestigten Sensor, **dadurch gekennzeichnet, dass**
wenigstens ein kombiniertes Erkennungssystem (6) mit thermischen und optischen Sensoren mit wenigstens einem nach oben gerichteten thermischen und optischen Bildbereich (7) im Fußbereich (5) des Turms (2) angeordnet ist und mit einem Auswerte- und Steuerungssystem der Windenergieanlage (1) verbunden ist.

11. Antikollisionssystem nach Anspruch 9 oder 10 **dadurch gekennzeichnet, dass** mehrere Erkennungssysteme (6) gleichmäßig am Umfang des Turms (2) in einer horizontalen Ebene verteilt angeordnet sind, so dass die Bildbereiche (7) einen umlaufenden Abdeckungsbereich in Form eines trichterförmigen Messvolumens bilden.

12. Antikollisionssystem nach Anspruch 9 oder 10 **dadurch gekennzeichnet, dass** mehrere Erkennungssysteme (6) gleichmäßig am Umfang des Turms (2) abwechselnd vertikal versetzt angeordnet sind, so dass die Bildbereiche (7) eine Kuppel (73) als Messvolumen über der Windenergieanlage (1) bilden.

13. Antikollisionssystem nach einem der Ansprüche 9 bis 12 **dadurch gekennzeichnet, dass**
das wenigstens eine Erkennungssystem (6) mit wenigstens einer zusätzlichen Lichtquelle verbunden ist, welche durch das Erkennungssystem (6) gesteuert wird.

14. Windenergieanlage (1), umfassend einen Turm (2), eine Gondel (3) mit Rotor und am Rotor befindlichen Rotorblättern (4) **dadurch gekennzeichnet, dass** im Fußbereich (5) des Turms (2) wenigstens ein Erkennungssystem (6) aus thermischen Sensoren mit einem nach oben gerichteten Bildbereich (7) angeordnet ist und mit einem Auswerte- und Steuerungssystem der Windenergieanlage (1) verbunden ist.

15. Windenergieanlage (1), umfassend einen Turm (2), eine Gondel (3) mit Rotor und am Rotor befindlichen Rotorblättern (4) **dadurch gekennzeichnet, dass** im Fußbereich (5) des Turms (2) wenigstens ein kombiniertes Erkennungssystem (6) aus thermischen und optischen Sensoren mit einem nach oben gerichteten Bildbereich (7) angeordnet ist und mit einem Auswerte- und Steuerungssystem der Windenergieanlage (1) verbunden ist.

16. Windenergieanlage (1) nach Anspruch 14 oder 15 **dadurch gekennzeichnet, dass**
wenigstens eine zusätzlichen Lichtquelle mit dem wenigstens einen Erkennungssystem (6) verbunden ist und durch das Erkennungssystem (6) gesteuert wird.

## Geänderte Patentansprüche

### Geänderte Patentansprüche gemäss Regel 137(2) EPÜ.

1. Verfahren für ein Antikollisionssystem für eine Windenergieanlage (1) mit wenigstens einem am Turm (2) der Windenergieanlage (1) befestigten Sensor, wobei ein erstes Erkennungssystem (6) mit wenigstens einem thermischen Sensor wenigstens einen nach oben gerichteten thermischen Bildbereich (7) umfasst, oder ein zweites, kombiniertes Erkennungssystem (6) mit thermischen und optischen Sensoren wenigstens einen nach oben gerichteten thermischen und optischen Bildbereich (7) umfasst, **dadurch gekennzeichnet, dass**
der thermische Bildbereich (7) des ersten Erkennungssystems (6) mit dem wenigstens einen thermischen Sensor ein Messvolumen darstellt und digital ausgewertet wird oder der thermische und der optische Bildbereich (7) des zweiten, kombinierten Erkennungssystems (6) mit thermischen und optischen Sensoren ein einziges Messvolumen darstellt und gleichzeitig digital ausgewertet wird, wobei der jeweils wenigstens eine nach oben gerichtete Bildbereich (7) ein pyramiden- oder kegelförmig ausgeprägtes Messvolumen bilden.

2. Verfahren nach Anspruch 1 **dadurch gekennzeichnet, dass** mehrere Erkennungssysteme (6) mit ihren Bildbereichen (7) einen vollständigen Abdeckungsbereich um die gesamte Windenergieanlage (1) herum umfassen, wobei jedes Erkennungssystem (6) für sich oder in Koordination mit den benachbarten Erkennungssystemen (6) Steuersignale an ein Auswerte- und Steuerungssystem der Windenergieanlage (1) geben.

3. Verfahren nach Anspruch 2 **dadurch gekennzeichnet, dass** die Bildbereiche (7) in einen kugelförmigen Kollisionsbereich (10) und einen kugelschalenförmigen Gefahrenbereich (11) eingeteilt sind, wobei der kugelschalenförmige Gefahrenbereich (11) Bereiche (12) mit vermindertem Kollisionsrisiko enthält.

4. Verfahren nach einem der vorhergehenden Ansprüche 1 bis 3 **dadurch gekennzeichnet, dass**
bei Eintritt eines Objektes in den Bildbereich (7) eines der Erkennungssysteme (6) dieses Objekt von den Sensoren erfasst wird und das Messvolumen an eine automatischen Bildverarbeitung weitergegeben wird, wobei eine Verarbeitungssoftware mit einer selbstlernenden Datenbank in Verbindung steht, wodurch über die Bewegung des Objektes und/oder über gemessene thermische Merkmale des Objektes und/oder über einen Abgleich mit in der Datenbank hinterlegten oder gelernten Merkmale eine Entscheidung getroffen wird, ob das Objekt auf Kollisionskurs ist, und dass ein Steuersignal an das Auswerte- und Steuerungssystem der Windenergieanlage (1) geben wird, wodurch ein Abbremsvorgang der Windenergieanlage (1) eingeleitet wird und/oder Warnmaßnahmen zur Verhinderung des Eindringens von Flugobjekten (8) ausgelöst werden.

5. Verfahren nach Anspruch 4 **dadurch gekennzeichnet, dass** die Warnmaßnahmen vor, während und/oder nach dem Einleiten des Abbremsvorgangs der Windenergieanlage (1) ausgelöst werden.

6. Verfahren nach einem der vorhergehenden Ansprüche 1 bis 5 **dadurch gekennzeichnet, dass**
wenigstens eine zusätzliche Lichtquelle durch das wenigstens eine Erkennungssystem (6) gesteuert wird.

7. Antikollisionssystem für eine Windenergieanlage (1) mit wenigstens einem am Turm (2) der Windenergieanlage (1) befestigten Sensor, umfassend wenigstens ein erstes Erkennungssystem (6) mit wenigstens einem thermischen Sensor mit einem nach oben gerichteten Bildbereich (7) oder umfassend wenigstens ein zweites, kombiniertes Erkennungssystem (6) mit thermischen und optischen Sensoren mit wenigstens einem nach oben gerichteten thermischen und optischen Bildbereich (7), wobei die Erkennungssysteme (6) jeweils im Fußbereich (5) des Turms (2) angeordnet sind, **dadurch gekennzeichnet, dass**
die Erkennungssysteme (6) mit einem Auswerte- und Steuerungssystem der Windenergieanlage (1) verbunden sind,
und dass mehrere Erkennungssysteme (6) gleichmäßig am Umfang des Turms (2) in einer horizontalen Ebene verteilt angeordnet sind, so dass die Bildbereiche (7) einen umlaufenden Abdeckungsbereich in Form eines trichterförmigen Messvolumens bilden
oder dass mehrere Erkennungssysteme (6) gleichmäßig am Umfang des Turms (2) abwechselnd vertikal versetzt angeordnet sind, so dass die Bildbereiche (7) eine Kuppel (73) als Messvolumen über der Windenergieanlage (1) bilden.

8. Antikollisionssystem nach Anspruch 7 **dadurch gekennzeichnet, dass** das wenigstens eine Erkennungssystem (6) mit wenigstens einer zusätzlichen Lichtquelle verbunden ist, welche durch das Erkennungssystem (6) gesteuert wird.

9. Windenergieanlage (1), umfassend einen Turm (2), eine Gondel (3) mit Rotor und am Rotor befindlichen Rotorblättern (4), wobei im Fußbereich (5) des Turms (2) wenigstens ein erstes Erkennungssystem (6) aus thermischen Sensoren mit einem nach oben gerichteten Bildbereich (7) angeordnet ist oder wenigstens ein zweites, kombiniertes Erkennungssystem (6) aus thermischen und optischen Sensoren mit einem nach oben gerichteten Bildbereich (7) angeordnet ist, **dadurch gekennzeichnet, dass**
das erste oder das zweite Erkennungssystem (6) jeweils mit einem Auswerte- und Steuerungssystem der Windenergieanlage (1) verbunden ist.

10. Windenergieanlage (1) nach Anspruch 9 **dadurch gekennzeichnet, dass** wenigstens eine zusätzlichen Lichtquelle mit dem wenigstens einen Erkennungssystem (6) verbunden ist und durch das Erkennungssystem (6) gesteuert wird.
